# EUROPÄISCHE PATENTSCHRIFT

(11) **EP 2 054 198 B1**
(45) Veröffentlichungstag und Bekanntmachung des Hinweises auf die Patenterteilung: **22.12.2010**
(21) Anmeldenummer: 07818034.6
(22) Anmeldetag: 16.08.2007
(51) Int. Cl.: B25J 15/04, B23Q 1/00

(54) **SCHWEISSGERÄTWECHSELSYSTEM FÜR EINE HANDHABUNGSVORRICHTUNG**
WELDING TOOL CHANGER FOR A HANDLING DEVICE
SYSTÈME INTERCHANGEABLE D'APPAREILS DE SOUDAGE POUR DISPOSITIF DE MANIPULATION

(30) Priorität: 16.08.2006 AT 6212006 U
(43) Veröffentlichungstag der Anmeldung: 06.05.2009
(73) Patentinhaber: ABB AG, 1109 Wien (AT)
(72) Erfinder: IHRIG, Jörg, 64711 Erbach (DE); GFATTER, Stefan, A-1010 Wien (AT)
(74) Vertreter: Partner, Lothar
(86) Internationale Anmeldenummer: PCT/EP2007/007255
(87) Internationale Veröffentlichungsnummer: WO 2008/019859

(56) Entgegenhaltungen:
- WO-A-03/053640
- WO-A-2004/069492
- WO-A-2006/047261
- DE-A1- 3 705 123
- DE-A1- 3 912 306
- DE-U1- 20 208 060
- DE-U1- 29 718 726
- GB-A- 2 120 634

## Beschreibung

Die Erfindung betrifft ein Schweißgerätewechselsystem für eine Handhabungsvorrichtung, insbesondere einen mehrachsigen Industrieroboter, welche eine Kupplungsvorrichtung mit zwei koppelbaren Kupplungselementen aufweist. An einem der Kupplungselemente ist dabei ein Schweißgerät anordenbar wohingegen das jeweils andere Kupplungselement am distalen Ende der Handhabungsvorrichtung angebracht ist.

Der Einsatz von Robotern im Automatisierungsbereich, beispielsweise in der Lackier- und/oder Schweißtechnik, oder von robotergestützter Automation zählt zu den am weitest verbreiteten Anwendungen bei modernen Robotersystemen. Dabei sind Hybridsysteme, das heißt kombinierte Systeme von Mensch und Maschine, welche beispielsweise bei der Produktion von Werkstücken effizient zusammenwirken beziehungsweise interagieren, von zentraler Bedeutung. Ihnen kommt in der Automatisierungstechnik eine tragende Rolle zu.

Beispielsweise sind Anwendungen bekannt, bei welchen ein Bediener eine Vorrichtung mit Teilen und/oder Rohmaterialien bestückt, welche einem Roboter in einem nächsten Schritt zur weiteren Bearbeitung, beispielsweise zum Zusammenbau, Polieren, Entgraten, Lackieren oder Verschweißen, zugeführt werden. Auch das Entladen fertig bearbeiteter Teile erfolgt oftmals durch einen Bediener, der ebenfalls auch für Wartungs-, Service- und Instandhaltungsarbeiten verantwortlich sein kann.

Dabei ist man jedoch stets bestrebt immer mehr Bearbeitungsschritte zu automatisieren und von der Handhabungsvorrichtung, insbesondere einem mehrachsigen Roboter, ausführen zu lassen. Dies zu realisieren sind variable Handhabungsvorrichtungen mit hoher Funktionalität, variablen Einsatzmöglichkeiten und großem Leistungsspektrum gefordert.

Auch wenn moderne Handhabungsvorrichtungen inklusive deren Steuerungen auf größtmögliche Flexibilität sowie Funktionalität und für einen möglichst weit gefassten Einsatzbereich hin ausgelegt bzw. ausgerichtet sind, finden sich zahlreiche Anwendungsbereiche, wie insbesondere beim Schweißen oder bei Schweißapplikationen, in welchen die jeweilig eingesetzten Robotersysteme sehr spezifisch und auf die Bewältigung genau einer speziellen Aufgabe eingerichtet und/oder ausgebildet sind.

Entsprechend ist bei bekannten Schweißrobotern, nicht zuletzt um eine gesicherte Zuführung der Versorgungsmedien zu gewährleisten, eine feste Verbindung zwischen beispielsweise Schweißbrenner und Roboter vorgesehen und das Einsatzgebiet des Roboters exakt vorherbestimmt. Weitere Tätigkeiten und/oder Funktionalitäten, wie beispielsweise das Greifen und/oder Auftragen und/oder Entgraten und/oder Polieren sind allenfalls, bedingt durch die jeweiligen Anwendung, durch den Einsatz von Kombinationsgeräten ermöglicht, wobei die Flexibilität und das Spektrum des Roboters hinsichtlich möglicher Tätigkeiten, Bewegungen und/oder der Tragkraft allein auch aufgrund der räumlichen, und oder baulichen Vorgaben durch die eingesetzten Endeffektoren beziehungsweise Werkzeuge dennoch stark eingeschränkt ist. Der Begriff Endeffektor stellt dabei einen Oberbegriff für alle FunktionseinheitenlWerkzeuge dar die am Ende der kinematischen Kette eines Robotersystems, vorzugsweise am distalen Ende des Roboterarms eingesetzt werden können. Als Funktionseinheiten/Werkzeuge können Greifer, Bearbeitungswerkzeuge, wie beispielsweise Schleifer, Polierer, Schweißgeräte oder Schweißpistolen, Schweißbrenner, Trennschleifer und dergleichen, Prüfmittel und sonstige Arbeitsorgane eingesetzt werden.

Beispielsweise ist aus der WO 2006/047261 A ein Werkzeugschnellwechselsystem zur vereinfachten Anordnung eines endseitigen Werkzeugs an einem Manipulator bekannt geworden, welches ein mit dem Manipulator verbindbares Basismodul, sowie ein mit dem jeweiligen endseitigen Werkzeug verbindbares Werkzeugmodul, sowie mindestens eine Kupplung zur Energieversorgung aufweist. Die Kupplung zur Energieversorgung umfasst dabei ein erstes Element, welches an das Basismodul koppelt, und ein zweites Element, welches an das Werkzeugmodul koppelt, wobei beide Elemente miteinander derart koppel- beziehungsweise kuppelbar sind, so dass Energie vom Manipulator zum endseitigen Werkzeug leitbar ist.

Bei einer Schweißanwendung wird als Werkzeug ein Schweißbrenner beziehungsweise eine Schweißpistole verwendet, wobei unterschiedliche Arten hinlänglich bekannt sind. Die Versorgung des Schweißbrenners erfolgt in aller Regel über ein Schlauchpaket, in welchem alle erforderlichen Versorgungsmedien geführt und übergeben werden. Beim Schutzgasschweißverfahren beispielsweise umfasst Schlauchpaket eine Schweißleitung, einen Schutzgasschlauch, einen Kühlwasservorlauf und einen Kühlwasserrücklauf, wenigstens eine Steuerleitung sowie einen Drahtförderschlauch mit Drahtführungsseele.

Bei bekannten Anordnungen wird die Flexibilität des Roboters, auch im Schweißbereich, durch die Verwendung sogenannter Wechselsysteme beziehungsweise -module erhöht. Wechselsysteme sind dabei als definierte und mechanisch nahezu standardisierte Schnittstellen zum schnellen Wechseln von Endeffektoren zu verstehen. Beim Trenn- beziehungsweise Entköpplungsprozess oder beim Kopplungsprozess wird dabei nicht nur der Endeffektor beziehungsweise das jeweilige Werkzeug gewechselt, sondern mit dem Werkzeug auch alle Versorgungs- und/oder Informationsleitungen zum Werkzeug. Das jeweilige Wechselsystem bildet die Schnittstelle zwischen Endeffektor, wie beispielsweise einem Greifer, einem Werkzeug und/oder einem Mess- oder Prüfmittel, und der jeweiligen Handhabungsvorrichtung, wie insbesondere einem Teleoperator oder sechsachsigen Industrieroboter, oder einer Maschine, wie beispielsweise eine Bohr-, Fräs- oder Drehmaschine. Diese Kopplung von Handhabungsvorrichtung und Endeffektor gewährleistet die mechanische Verbindung, insbesondere den Kraftfluss, den Energiefluss, den Informationsfluss, den Stofffluss oder eine Kombination daraus, zum jeweiligen Endeffektor.

Dementsprechend wird bei derartigen Anordnungen aus dem Schweißbereich der Schweißbrenner mittels einer Kupplungsvorrichtung am distalen Ende der jeweiligen Handhabungsvorrichtung beziehungsweise des jeweiligen Roboters befestigt, wobei die Zuleitung beispielsweise des Schweißdrahtes sowie der übrigen Versorgungsmedien über wenigstens eine Schlauchpakete-Zuführung erfolgt, welche üblicherweise an sog. Galgen aufgehängt und mittels einer internen Feder auf Zug gehalten wird. Anbeziehungsweise Eingekuppelt oder Ab- beziehungsweise Ausgekuppelt wird dabei jeweils die komplette Schweißausrüstung, das heißt Schweißbrenner mit Versorgungsschlauch sowie Versorgungsmedien.

Die Zuführung insbesondere des Schweißdrahtes mithilfe eines langen Schlauch paketes bedingt nachteilig dass die Aufhängung des Schlauch paketes an einer Vorrichtung -dem Galgen- die Beweglichkeit des Roboters innerhalb seines Arbeitsbereiches nachhaltig einschränkt. Zudem wird dem Roboter durch die unterschiedlichen Kräfte der Spannfeder beim Abrollen der jeweiligen Aufhängung/Halterung über das Schlauchpaket eine nicht bestimmbare dynamische und veränderliche Kraft beaufschlagt, welche sein Bahnverhalten sowie sein Lastverhalten beeinflussen kann. Des weiteren muss durch die Länge des Schlauchpaketes beim Drahtvorschub an der Schweißquelle wie auch am Schweißbrenner beziehungsweise der Schweißpistole selbst Antriebseinheiten installiert werden, um einen konstanten Drahtvorschub zu gewährleisten, dadurch vergrößert sich die Bauform, insbesondere der Schweißpistole, was sich wiederum negativ auf die Flexibilität des Roboters als auch auf den Schweißprozess selbst auswirken kann.

Der Erfindung liegt die Aufgabe zu Grunde eine Möglichkeit anzugeben, welche eine effiziente und weitestgehend flexible Nutzung und Einsatzbereich auch eines Schweißroboters erlaubt.

Diese Aufgabe wird durch ein Schweißgerätewechselsystem für eine Handhabungsvorrichtung mit den Merkmalen des Anspruchs 1 gelöst.

Demgemäß umfasst das Schweißgerätewechselsystem für eine Handhabungsvorrichtung mit einer Kupplungsvorrichtung mit einem ersten Kupplungselement, welches am distalen Ende einer Handhabungsvorrichtung angeordnet ist, und mit einem zweiten Kupplungselement, welches an das erste Kupplungselement koppelbar ist und an welcher wenigstens ein Schweißgerät anordenbar ist, wobei das erste Kupplungselement wenigstens ein Führungsmittel zur Führung und/oder Weiterleitung wenigstens eines Versorgungsmediums, insbesondere eines Schweißdrahtes, an die zweite Kupplungshälfte aufweist, welche wenigstens ein Aufnahmemittel zur Aufnahme und Weiterleitung des jeweiligen Versorgungsmediums an das Schweißgerät aufweist, und wobei das zweite Kupplungselement vollständig vom ersten Kupplungselement sowie die Aufnahmevorrichtung vom wenigstens einen Versorgungsmedium derart trennbar beziehungsweise entkoppelbar sind, dass das zweite Kupplungselement vom ersten Kupplungselement abnehmbar ist, wobei das wenigstens eine Versorgungsmedium weiterhin durch das Führungsmittel des ersten Kupplungselementes geführt ist.

Da das jeweilige Versorgungsmedium stets durch die Handhabungsvorrichtung geführt wird und jede ihrer Bewegungen folgt, kann auf die beschränkende Verwendung von Galgen zur Führung und Halterung von Versorgungsschläuchen vorteilhaft verzichtet werden.

Auch ist durch die flexiblen Nutzungsmöglichkeiten der Kupplungsvorrichtung und insbesondere eine variable Bestückung des zweiten Kupplungselementes eine vielseitige Nutzung auch anderer Werkzeuge wie Schneidbrenner, Poliergeräte, Entgratungsgeräte, Lackiergeräte und dergleichen mehr möglich.

Der Wechselprozess beziehungsweise auch Kopplungs- oder Kupplungsprozess kann dabei manuell oder auch automatisch durchgeführt werden. Vorteilhaft ist dabei vorsehbar, dass die Kontrolle der Kupplungsvorrichtung über die Steuerung der Handhabungsvorrichtung, insbesondere der Robotersteuerung, sowie einer entsprechenden Kommunikationsverbindung zwischen Steuerung und/oder Roboter und/oder Wechselsystem, insbesondere auch der Kupplungsvorrichtung, bewirkt ist.

Weiterhin kann vorteilhaft vorgesehen sein, dass es sich bei der Kommunikationsverbindung um eine drahtgebundene oder drahtlose Kommunikationsverbindung, beispielsweise der Art Bluetooth, WLAN, LAN, WAN, CAN, GPRS, USB, Ethernet, Profibus, Modbus, SCSI, PCI oder RS-232 handeln kann.

In einer vorteilhaften Ausgestaltung ist vorgesehen, dass das erste Kupplungselement eine Grundplatte mit Lochmuster und/oder wenigstens eine Zentrierhilfe zur erleichterten Anordnung des ersten Kupplungselementes am distalen Ende der jeweiligen Handhabungsvorrichtung aufweist. Weiterhin ist vorsehbar, dass die Grundplatte Führungsmittel zur Führung und/oder Weiterleitung aller für den Schweißprozess erforderlichen Medien, wie beispielsweise Wasser zur Kühlung, Schweißdraht, Gas und/oder Strom zum Betrieb des Brenners, Strom zum Betrieb der Kupplungsvorrichtung und/oder Kommunikationsverbindungen aufweist.

In einer weiteren Ausgestaltung ist vorgesehen, dass das zweite Kupplungselement eine Anbauplatte mit Lochmuster und/oder wenigstens einer Zentrierhilfe zur vereinfachten Anordnung wenigstens eines Schweißgerätes aufweist. Weiterhin ist vorsehbar, dass die Anbauplatte wenigstens ein Aufnahmemittel zur Aufnahme und/oder Weiterleitung wenigstens eines, insbesondere jedoch aller für den Schweißprozess erforderlichen Medien, wie beispielsweise Wasser zur Kühlung, Schweißdraht, Gas und/oder Strom zum Betrieb des Brenners, Strom zum Betrieb der Kupplungsvorrichtung und/oder Kommunikationsverbindungen an das jeweilige Schweißgerät aufweist.

Vorteilhaft können dabei auch verschiedenartige Schweißgeräte, welche für unterschiedlichen Scheißverfahren und/oder Arten ausgelegt zum Einsatz kommen. Dazu zählen unter Anderem Schweißgeräte zum Gasschmelzschweißen, Lichtbogenschmelzschweißen, Schutzgasschweißen, Wolfram-Schutzgasschweißen, Metall-Schutzgasschweißen, Strahlschweißen oder Laserschweißen.

Auch ist vorsehbar, dass es sich bei wenigstens einem Führungsmittel und/oder Aufnahmemittel um eine Einrichtung zur Übertragung von elektrischen Signalen oder zur Durchführung von Gasen und/oder Flüssigkeiten, insbesondere um Stecker oder Kontakte oder Durchführungen handelt.

Bei einer weiteren Ausführung ist vorgesehen, dass es sich bei wenigstens einem Versorgungsmedium um einen Schweißdraht handelt, der dem jeweilig eingesetzten Schweißgerät, insbesondere Schweißbrenner, zuführbar ist.
Auch kann vorgesehen sein, dass das jeweilige Schweißgerät als Schweißbrenner und/oder eine Schweißpistole ausgebildet ist.

In einer weiteren vorteilhaften Ausführung umfasst die Kupplungsvorrichtung zusätzliche, nicht für den eigentlichen Schweißprozess benötigte Signal- und Versorgungsleitungen, welche insbesondere zum Betrieb und zur Ansteuerung/Auslesung sicherheitsgerichteter Vorrichtungen wie beispielsweise einer Not-Aus-Sicherheitsabschaltung und/oder Abstands- und/oder Bewegungserfassung und/oder Positionskontrolle vorgesehen sein können.

Weiterbildend können an dem ersten Kupplungselement, insbesondere der Grundplatte, ein oder mehrere verschiedene Schweißprozessanschlüsse beziehungsweise Anschlussmöglichkeiten vorgesehen sein.

In einer weiteren Ausgestaltung ist vorsehbar, dass das wenigstens eine Aufnahmemittel des zweiten Kupplungselementes einen flexiblen Schutzschlauch umfasst, der die Versorgungsleitungen und/oder den wenigstens einen Schweißdraht umgibt und schützt und/oder diese zum jeweiligen Schweißgerät führt.

In Fortbildung des Wechselsystems können an dem zweiten Kupplungselement, insbesondere der Anbauplatte zusätzliche Applikationen wie Sicherheitsabschaltungen und/oder Messeinrichtungen und/oder Sensoren und/oder zusätzliche Bearbeitungswerkzeuge angeordnet sein.

Auch ist denkbar, dass wenigstens ein weiteres zweites Kupplungselement mit alternativen Bearbeitungswerkzeugen vorgesehen ist, welches mit dem an der Handhabungsvorrichtung angekoppelte zweite Kupplungselement mit Schweißgerät ausgewechselt werden kann.

Der Wechselprozess kann dabei manuell oder auch automatisch durchgeführt werden.

Beispielsweise ist vorsehbar, dass auf dem zweiten Kupplungselement alternativ zu einem Schweißgerät auch ein Poliergerät und/oder ein Entgratungsgerät und/oder ein Lackiergerät und/oder ein Schneidbrenner und/oder ein Trennschleifer anordenbar und/oder in angekoppelten Zustand betreibbar ist.

Auch ist vorsehbar, dass beispielsweise zusätzliche Versorgungskabel und/oder Leitungen extern oder zusammen mit einem Schweißschlauch an der ersten Kupplungseinrichtung, insbesondere deren Grundplatte anschließbar sind.

Weiterhin ist dabei vorsehbar, dass ein am ersten Kupplungselement vorgesehenes Führungsmittel für den Schweißdraht wenigstens eine herkömmliche Drahtzuführung umfasst.

Die Bewegung des Schweißdrahtes in beiden Richtungen -vor und zurück- kann durch die Drahtzuführung in dem Maße bewirkt werden, wie es bei einem Schweißhalswechsel bereits üblich ist und/oder derart dass der Schweißdraht in das Schweißgerät und/oder die Aufnahmevorrichtung eingeführt oder ausgeführt, beziehungsweise entkoppelt, werden kann.

Alternativ könnte die Drahtzuführung auch Teil der Aufnahmevorrichtung bilden

Die weitere Darlegung der Erfindung und vorteilhafter Weiterbildungen erfolgt anhand von einigen Figuren und Ausführungsbeispielen.

Es zeigen:
Fig. 1 beispielhaft ausgebildetes Schweißgerätewechselsystem für eine Handhabungsvorrichtung,
Fig. 2 beispielhaft ausgebildetes gegen Fig. 1 abgewandeltes Schweißgerätewechselsystem für eine Handhabungsvorrichtung,
Fig. 3 beispielhaft ausgebildetes, gegen Fig. 1 und Fig. 2 abgewandeltes Schweißgerätwechselsystem für eine Handhabungsvorrichtung.

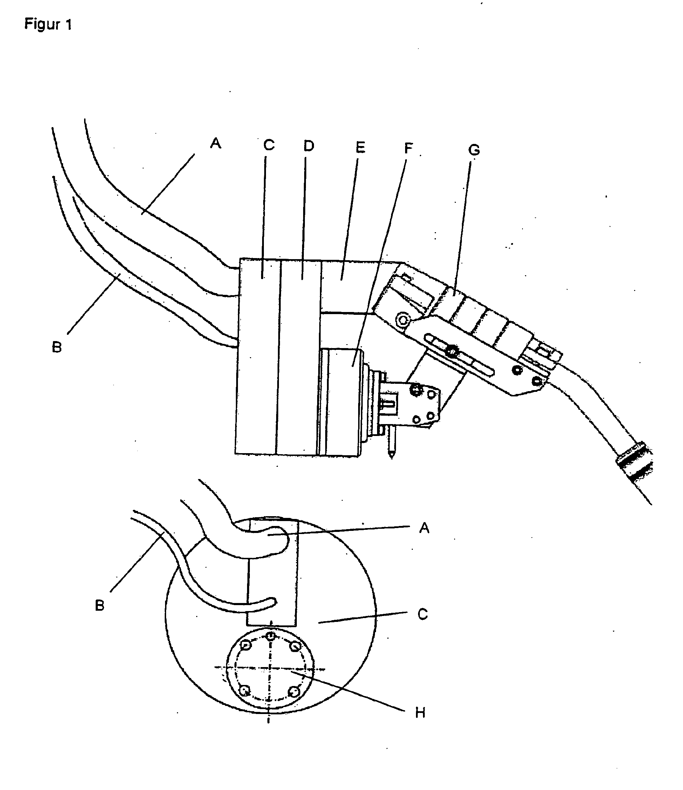

In Fig. 1 ist ein beispielhaft ausgebildetes Schweißgerätewechselsystem für eine Handhabungsvorrichtung 8 mit einer Kupplungsvorrichtung 5,6,7,C,D mit einem ersten Kupplungselement 7,6,C, welches am distalen Ende einer Handhabungsvorrichtung 8 angeordnet ist, und mit einem zweiten Kupplungselement 6,5,D, welches an das erste Kupplungselement 7,6,C koppelbar ist und an welcher wenigstens ein Schweißgerät G,3,4 anordenbar ist, gezeigt. Das erste Kupplungselement 7,6,C weist wenigstens ein Führungsmittel 2 zur Führung und/oder Weiterleitung wenigstens eines Versorgungsmediums, insbesondere eines Schweißdrahtes, an die zweite Kupplungshälfte 5,6,D auf, welche wenigstens ein Aufnahmemittel 2 zur Aufnahme und Weiterleitung des jeweiligen Versorgungsmediums an das Schweißgerät G,3,4 aufweist, und wobei das zweite Kupplungselement D,6,5 vollständig vom ersten Kupplungselement C,7,6 sowie die Aufnahmevorrichtung 2 vom wenigstens einen Versorgungsmedium derart trennbar beziehungsweise entkoppelbar sind, dass das zweite Kupplungselement D,5,6 vom ersten Kupplungselement C,6,7 abnehmbar ist, wobei das wenigstens eine Versorgungsmedium 1 weiterhin durch das Führungsmittel 2 des ersten Kupplungselementes C,7,6 geführt ist.

In der speziellen Ausführung nach Fig. 1 ist ein Versorgungsschlauch A für die Schweißausrüstung gezeigt, der in das erste Kupplungselement C eingeführt ist.

Der Versorgungsschlauch A beinhaltet dabei alle nötigen Versorgungsleitungen sowie einen oder mehrere Schweißdrähte.

Des weiteren ist ein externes Signal- und Versorgungskabel B beispielsweise für zusätzliche Greifer und dergleichen gezeigt.

In einer vorteilhaften Ausgestaltung ist vorgesehen, dass das erste Kupplungselement C eine Grundplatte H mit Lochmuster und/oder wenigstens eine Zentrierhilfe zur erleichterten Anordnung des ersten Kupplungselementes C am distalen Ende der jeweiligen Handhabungsvorrichtung aufweist. Weiterhin ist vorsehbar, dass die Grundplatte H Führungsmittel zur Führung und/oder Weiterleitung aller für den Schweißprozess erforderlichen Medien, wie beispielsweise Wasser zur Kühlung, Schweißdraht, Gas und/oder Strom zum Betrieb des Brenners, Strom zum Betrieb der Kupplungsvorrichtung und/oder Kommunikationsverbindungen aufweist.

In einer weiteren Ausgestaltung ist vorgesehen, dass das zweite Kupplungselement D eine Anbauplatte mit Lochmuster und/oder wenigstens einer Zentrierhilfe zur vereinfachten Anordnung wenigstens eines Schweißgerätes G aufweist. Weiterhin ist vorsehbar, dass die Anbauplatte wenigstens ein Aufnahmemittel zur Aufnahme und/oder Weiterleitung wenigstens eines, insbesondere jedoch aller für den Schweißprozess erforderlichen Medien, wie beispielsweise Wasser zur Kühlung, Schweißdraht, Gas und/oder Strom zum Betrieb des Brenners, Strom zum Betrieb der Kupplungsvorrichtung und/oder Kommunikationsverbindungen an das jeweilige Schweißgerät G aufweist.

Weiterhin ist in flexibler Schutzschlauch E für die Versorgungsleitung und den zum Schweißgerät G geführten Schweißdraht vorgesehen. Das Schweißgerät ist dabei als Schweißpistole G ausgebildet. Der Schutzschlauch ist in seiner Länge flexibel ausgebildet.

Auch eine Not-Aus Sicherheitsabschaltung F kann als zusätzliche Sicherung an der Anbauplatte zwischen Schweißpistole G und Anbauplatte vorgesehen sein. Dabei handelt es sich um eine handelsübliche Absicherung bei Kollision der Schweißpistole G mit dem zu bearbeitenden Werkstück oder Träger.

Alle wesentlichen Versorgungsmedien werden dabei intern durch das erste C sowie das zweite Kupplungsmittel D beziehungsweise die jeweiligen Führungsmittel, welches in die Grundplatte integriert ist, und Aufnahmemittel, welches zumindest anteilig in die Anbauplatte integriert ist, geführt.

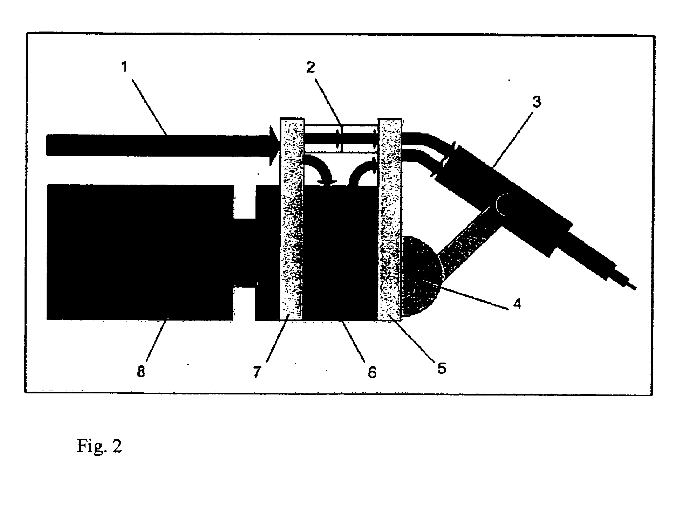

In Fig. 2 sind im Wesentlichen in Abwandlung gegenüber Fig. 1 die Versorgungsmedien 1 geteilt geführt. Der Schweißdraht wird mittelbar durch die Kopplungsvorrichtung über das Führungsmittel und Aufnahmemittel (Drahtdurchführung) 2 sowie die Grund- 7 und die Anbauplatte 5 an das Schweißgerät 3 übergegeben. Die restlichen Medien werden separat unmittelbar durch die gesamte Kopplungsvorrichtung 7,6,5 und/oder in die Kopplungsvorrichtung 7,6,5 integrierte Versorgungsleitungen und/oder Anschlüsse durchgeführt. Unmittelbar über die Kopplungsvorrichtung 7,6,5 werden folgende Medien übergeben: Signale, Schutzgas, Druckluft und Wasser. Diese Medien werden dann über die Adapaterplatte brennerseitig zusammengefasst und in den Brenner geführt.

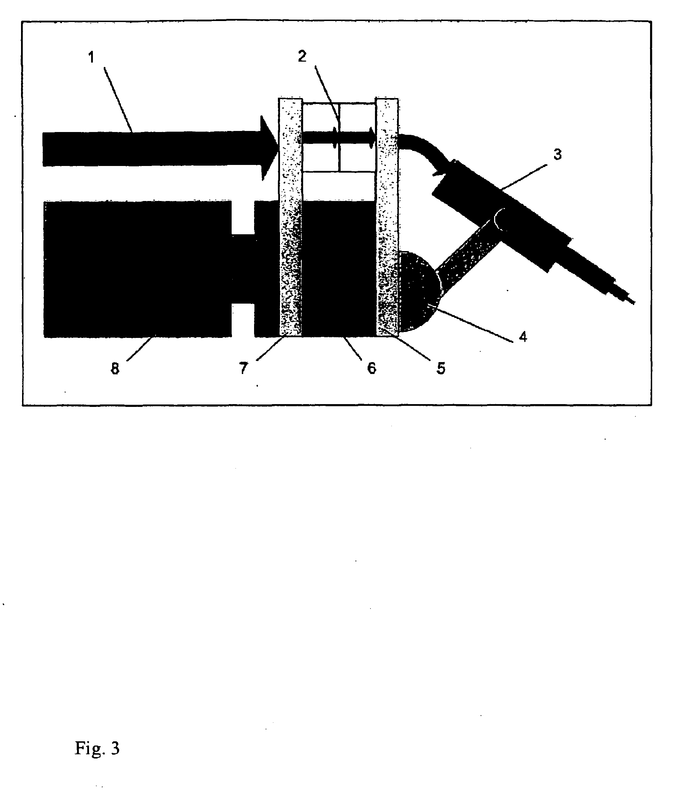

Alternativ dazu können, wie in Fig. 3 gezeigt auch alle erforderlichen Versorgungsmedien 1 mittelbar durch die Kopplungsvorrichtung über das Führungsmittel und Aufnahmemittel (Drahtdurchführung) 2 sowie die Grundplatte 7 und die Anbauplatte 5 an das Schweißgerät 3 übergegeben werden.

Auch eine Medienführung über Zusatzmodule oder Schweißmedienführung über Zusatzmodule und optionale Medienführung durch die eigentliche Kupplungsvorrichtung, wie beim Satteliten Tool Changer ist denkbar.

Die Art und Weise der Medienführung soll durch die hier angegebenen und beschriebenen Arten keinesfalls auf diese beschränkt sein. Alternative gängige Möglichkeiten sollen mitumfasst werden.

Vorteilhaft kann die Kopplung der beiden Kupplungselemente beispielhaft auch durch einen zwei- oder drei Backengreifer und/oder einen Spanndorn, insbesondere hydraulisch ausgebildet, an wenigstens jeweils einem der Kupplungselemente mit entsprechend komplementären Anordnungen am jeweils anderen Element bewirkt werden.

## Patentansprüche

1. Schweißgerätewechselsystem für eine Handhabungsvorrichtung mit einer Kupplungsvorrichtung mit einem ersten Kupplungselement (C,7,6), welches am distalen Ende einer Handhabungsvorrichtung (8) angeordnet ist, und mit einem zweiten Kupplungselement (D,6,5), welches an das erste Kupplungselement (C,7,6) koppelbar ist und an welchem wenigstens ein Schweißgerät (G,3,4) anordenbar ist, wobei das erste Kupplungselement (C,7,6) wenigstens ein Führungsmittel zur Führung und/oder Weiterleitung wenigstens eines Schweißdrahtes, an die zweite Kupplungshälfte (D,6,5) aufweist, welche wenigstens ein Aufnahmemittel zur Aufnahme und Weiterleitung des jeweiligen Schweißdrahtes an das Schweißgerät (G,3,4) aufweist, und wobei das zweite Kupplungselement (D,6,5) vollständig vom ersten Kupplungselement (C,7,6) sowie des Aufnahmemittel vom wenigstens einen Schweißdraht derart trennbar beziehungsweise entkoppelbar sind, dass das zweite Kupplungselement (D,6,5) vom ersten Kupplungselement (C,7,6) abnehmbar ist, wobei der wenigstens eine Schweißdraht weiterhin durch das Führungsmittel des ersten Kupplungselementes (C,7,6) geführt ist.

2. Schweißgerätewechselsystem nach Anspruch 1 **dadurch gekennzeichnet, dass** das erste Kupplungselement ( C ) eine Grundplatte (H) mit Lochmuster und/oder Zentrierhilfen zur Anordnung am distalen Ende der jeweiligen Handhabungsvorrichtung (8) aufweist und/oder die Grundplatte (H) Führungsmittel zur Führung und/oder Weiterleitung aller für den Schweißprozess erforderlichen Medien und/oder Kommunikationsverbindungen aufweist.

3. Schweißgerätewechselsystem nach Anspruch 2 **dadurch gekennzeichnet, dass** das zweite Kupplungselement (D) eine Anbauplatte mit Lochmuster und/oder Zentrierhilfen zur Anordnung wenigstens eines Schweißgerätes (G) aufweist und/oder die Grundplatte wenigstens ein Aufnahmemittel zur Aufnahme und/oder Weiterleitung aller für den Schweißprozess erforderlichen Medien und/oder Kommunikationsverbindungen an das Schweißgerät aufweist.

4. Schweißgerätewechselsystem nach einem der vorherigen Ansprüche, **dadurch gekennzeichnet, dass** es sich bei wenigstens einem Führungsmittel und/oder Aufnahmemittel um eine Einrichtung zur Übertragung von elektrischen Signalen oder zur Durchführung von Gasen und/oder Flüssigkeiten, insbesondere um Stecker oder Kontakte handelt.

5. Schweißgerätewechselsystem nach einem der vorherigen Ansprüche, **dadurch gekennzeichnet, dass** das Schweißgerät (G) ein Schweißbrenner und/oder eine Schweißpistole ist.

6. Schweißgerätewechselsystem nach einem der vorhergehenden Ansprüche, **dadurch gekennzeichnet, dass** die Kupplungsvorrichtung (C;D) zusätzliche, nicht für den eigentlichen Schweißprozess benötigte Signal- und Versorgungsleitungen (B) aufweist, insbesondere zum Betrieb und zur Ansteuerung/Auslesung sicherheitsgerichteter Vorrichtungen wie einer Not-Aus-Sicherheitsabschaltung (F).

7. Schweißgerätewechselsystem nach einem der vorhergehenden Ansprüche **dadurch gekennzeichnet, dass** an dem ersten Kupplungselement ( C ), insbesondere der Grundplatte (H), verschiedene Schweißprozessanschlüsse (A) anordenbar sind.

8. Schweißgerätewechselsystem nach einem der vorhergehenden Ansprüche **dadurch gekennzeichnet, dass** das wenigstens eine Aufnahmemittel des zweiten Kupplungselementes (D) einen flexiblen Schutzschlauch (E) umfasst, um die Versorgungsleitungen und/oder den wenigstens einen Schweißdraht zu umgeben und zu schützen und/oder zum Schweißgerät (G) zu führen.

9. Schweißgerätewechselsystem nach einem der vorhergehenden Ansprüche **dadurch gekennzeichnet, dass**, an dem zweiten Kupplungselement (D), insbesondere der Anbauplatte zusätzliche Applikationen wie Sicherheitsabschaltungen (F) und/oder Messeinrichtungen und/oder Sensoren und/oder zusätzliche Bearbeitungswerkzeuge anordenbar sind.

10. Schweißgerätewechselsystem nach einem der vorhergehenden Ansprüche, **dadurch gekennzeichnet, dass** zusätzliche Versorgungskabel und/oder Leitungen (B) extern oder zusammen mit einem Schweißschlauch (A) an der ersten Kupplungseinrichtung (C), insbesondere deren Grundplatte anschließbar sind.

## Claims

1. Welder changing system for a handling apparatus having a coupling apparatus with a first coupling element (C, 7, 6) which is arranged at the distal end of a handling apparatus (8), and having a second coupling element (D, 6, 5) which can be coupled to the first coupling element (C, 7, 6) and on which at least one welder (G, 3, 4) can be arranged, wherein the first coupling element (C, 7, 6) has at least one guide means for guiding and/or passing on at least one welding wire to the second coupling half (D, 6, 5), the latter of which has at least one holding means for holding and passing on the respective welding wire to the welder (G, 3, 4), and wherein the second coupling element (D, 6, 5) can be disconnected or decoupled completely from the first coupling element (C, 7, 6), and the holding means can be disconnected or decoupled from the at least one welding wire, such that the second coupling half (D, 6, 5) can be removed from the first coupling element (C, 7, 6), wherein the at least one welding wire is also guided through the guide means of the first coupling element (C, 7, 6).

2. Welder changing system according to Claim 1, **characterized in that** the first coupling element (C) has a baseplate (H) with a hole pattern and/or centring aids for arrangement at the distal end of the respective handling apparatus (8), and/or the baseplate (H) has guide means for guiding and/or passing on all of the media and/or communication connections required for the welding process.

3. Welder changing system according to Claim 2, **characterized in that** the second coupling element (D) has a fitting plate with a hole pattern and/or centring aids for arrangement of at least one welder (G) and/or the baseplate has at least one holding means for holding and/or passing on all the media and/or communication connections required for the welding process, to the welder.

4. Welder changing system according to one of the preceding claims, **characterized in that** at least one guide means and/or holding means comprises a device for transmission of electrical signals or for passing through gases and/or liquids, in particular plugs or contacts.

5. Welder changing system according to one of the preceding claims, **characterized in that** the welder (G) is a welding burner and/or a welding gun.

6. Welder changing system according to one of the preceding claims, **characterized in that** the coupling apparatus (C; D) has additional signal and supply lines (B), which are not required for the actual welding process, in particular for operation and for controlling/reading safety-related apparatus such as emergency-off safety shut-down (F).

7. Welder changing system according to one of the preceding claims, **characterized in that** various welding process connections (A) can be arranged on the first coupling element (C), in particular the baseplate (H).

8. Welder changing system according to one of the preceding claims, **characterized in that** the at least one holding means for the second coupling element (D) comprises a flexible protective tube (E), in order to surround and to protect the supply lines and/or the at least one welding wire, and/or to pass them or it to the welder (G).

9. Welder changing system according to one of the preceding claims, **characterized in that** additional applications such as safety disconnections (F) and/or measurement devices and/or sensors and/or additional processing tools can be arranged on the second coupling element (D), in particular the fitting plate.

10. Welder changing system according to one of the preceding claims, **characterized in that** additional supply cables and/or lines (B) can be connected externally or together with a flexible welding tube (A) to the first coupling device (C), in particular to its baseplate.

## Revendications

1. Système d'échange d'appareils de soudage pour dispositif de manutention présentant un dispositif d'accouplement doté d'un premier élément d'accouplement (C, 7, 6) disposé à l'extrémité distale d'un dispositif de manipulation (8) et d'un deuxième élément d'accouplement (D, 6, 5) qui peut être accouplé au premier élément d'accouplement (C, 7, 6) et sur lequel au moins un appareil de soudage (G, 3, 4) peut être disposé,
le premier élément d'accouplement (C, 7, 6) présentant au moins un moyen de guidage qui guide et/ou fait avancer au moins un fil de soudure sur la deuxième moitié d'accouplement (D, 6, 5) qui présente au moins un moyen de réception qui reprend et fait avancer ce ou ces fils de soudure sur l'appareil de soudage (G, 3, 4),
le deuxième élément d'accouplement (D, 6, 5) pouvant être séparé ou découplé entièrement du premier élément d'accouplement (C, 7, 6) et le moyen de réception pouvant être séparé ou découplé complètement du ou des fils de soudure de telle sorte que le deuxième élément d'accouplement (D, 6, 5) puisse être enlevé du premier élément d'accouplement (C, 7, 6), le ou les fils de soudure étant ensuite guidés par le moyen de guidage du premier élément d'accouplement (C, 7, 6).

2. Système d'échange d'appareils de soudage selon la revendication 1, **caractérisé en ce que** le premier élément d'accouplement (C) présente une plaque de base (H) dotée d'un motif de trous et/ou d'accessoires de centrage qui permettent de le placer à l'extrémité distale du dispositif de manipulation (8) concerné et/ou **en ce que** la plaque de base (H) présente des moyens de guidage qui guident et/ou font avancer tous les fluides et/ou toutes les liaisons de communication nécessaires pour l'opération de soudage.

3. Système d'échange d'appareils de soudage selon la revendication 2, **caractérisé en ce que** le deuxième élément d'accouplement (D) présente une plaque de montage dotée d'un motif de trous et/ou d'accessoires de centrage qui permettent de placer au moins un appareil de soudage (G) et/ou **en ce que** la plaque de base présente au moins un moyen de réception qui reprend et/ou fait avancer tous les fluides nécessaires pour l'opération de soudage et/ou les liaisons de communication prévues sur l'appareil de soudage.

4. Système d'échange d'appareils de soudage selon l'une des revendications précédentes, **caractérisé en ce qu'**au moins un moyen d'avancement et/ou un moyen de réception sont un système de transfert de signaux électriques et/ou d'amenée de gaz et/ou de liquide, et en particulier des fiches ou des contacts.

5. Système d'échange d'appareils de soudage selon l'une des revendications précédentes, **caractérisé en ce que** l'appareil de soudage (G) est un brûleur de soudage et/ou un pistolet de soudage.

6. Système d'échange d'appareils de soudage selon l'une des revendications précédentes, **caractérisé en ce que** le dispositif d'accouplement (C; D) présente des conducteurs supplémentaires de signaux et d'alimentation (B) non nécessaires pour l'opération de soudage proprement dite, en particulier pour l'alimentation et la commande ou la lecture de dispositifs de sécurité, par exemple un débranchement de sécurité de secours (F).

7. Système d'échange d'appareils de soudage selon l'une des revendications précédentes, **caractérisé en ce que** différents raccordements (A) de l'opération de soudage peuvent être disposés sur le premier élément d'accouplement (C) et en particulier sur la plaque de base (H).

8. Système d'échange d'appareils de soudage selon l'une des revendications précédentes, **caractérisé en ce qu'**au moins un moyen de réception du deuxième élément d'accouplement (D) comporte un tuyau flexible de protection (E) qui entoure les conduits d'alimentation et/ou le ou les fils de soudure et les protège et/ou les amène à l'appareil de soudage (G).

9. Système d'échange d'appareils de soudage selon les revendications précédentes, **caractérisé en ce que** des applications supplémentaires, par exemple des débranchements de sécurité (F), des dispositifs de mesure, des détecteurs et/ou des outils supplémentaires de traitement peuvent être disposés sur le deuxième élément d'accouplement (D) et en particulier sur la plaque de montage.

10. Système d'échange d'appareils de soudage selon l'une des revendications précédentes, **caractérisé en ce que** des câbles supplémentaires et/ou des conduits supplémentaires (B) d'alimentation peuvent être raccordés à l'extérieur ou en même temps qu'un tuyau flexible de soudage (A) au premier dispositif d'accouplement (C) et en particulier à sa plaque de base.
